# EUROPEAN PATENT SPECIFICATION

(11) **EP 1 900 623 B1**
(45) Date of publication and mention of the grant of the patent: **07.11.2012**
(21) Application number: 07018021.1
(22) Date of filing: 13.09.2007
(51) Int. Cl.: B62J 37/00

(54) **Scooter-type vehicle**
Rollerartiges Fahrzeug
Véhicule de type scooter

(30) Priority: 13.09.2006 JP 2006247676; 23.08.2007 JP 2007217636; 28.08.2007 JP 2007220844
(43) Date of publication of application: 19.03.2008
(73) Proprietor: Yamaha Hatsudoki Kabushiki Kaisha, Shizuoka-ken 438-8501 (JP)
(72) Inventor: Taki, Norio, Iwata-shi Shizuoka-ken 438-8501 (JP); Morita, Youji, Iwata-shi, Shizuoka-ken 438-8501 (JP)
(74) Representative: Grünecker, Kinkeldey, Stockmair & Schwanhäusser

(56) References cited:
- JP-A- 2003 112 677
- JP-A- 2004 150 339
- JP-A- 2005 104 209
- JP-A- 2007 055 564
- US-A- 4 421 194

## Description

The present invention relates to a scooter type vehicle according to the preamble of independent claim 1 as well as the preamble of independent claim 6. Such a vehicle according to these two preambles is known from JP 2003 112677 A.

Many of scooter-type vehicles have a structure in which a power unit integrally including an engine and a transmission unit and a rear wheel are swingably coupled to a body frame and supported by a cushion unit. With this structure, while the vehicle is driven, the power unit and the rear wheel swing upward and downward or forward and backward against the body frame in response to conditions such as irregularities of a road surface. Such a scooter-type vehicle disclosed in JP-A-2006-130975 has a fuel tank on the frame body and it is provided with a fuel supply pipe connected between the fuel tank and the engine which swings in the manner as described above.

On the scooter-type vehicle as described above, while the vehicle is driven, the power unit and the rear wheel swing upward and downward or forward and backward against the body frame. In this case, the fuel supply pipe connected between the fuel tank and the engine swings upward and downward or forward and backward according to the movement of the power unit. In such a scooter-type vehicle, a fuel injection has begun to be employed. When the fuel injection is employed, in order to apply pressure with a pump on fuel which flows through the fuel supply pipe, a pipe with required stiffness is used as a fuel supply pipe. A fuel supply pipe having a high stiffness does not deform partially but tends to swing intensely as.a whole. Therefore, when such a high-stiff fuel supply pipe is employed on the vehicle, a relatively large space is required for arranging the fuel supply pipe in comparison with the case in which a fuel supply pipe having a low stiffness is employed.

In another patent document, JP 2005 104209 A, a fuel tank is connected to the body frame by a fuel pipe providing the engine with fuel. Due to the swingably connection of the fuel tank and the engine and the relative movement of the two members which comes along with it, special conditions are to be fulfilled by the fuel pipe. These conditions refer mainly to the flexibility of the fuel pipe which is achieved by assembling different hoses and tubes together. These hoses and tubes are of different material properties, especially the tube (83) is more of a rigid type while hoses (82) and (84) are more flexible.

Further, a one-piece fuel pipe of a motorcycle fuel system in JP 2003 112677A connects the fuel tank with the engine and is connected to a body frame of the motorcycle. The one-piece fuel pipe which connects the fuel tank with the engine is also connected to a body frame of the motorcycle. The fuel pipe is then connected to an injector, wherein the engine with the injector is swingably connected to the body frame. To compensate the movement between engine and fuel tank, the fuel pipe is made of flexible rubber.

It is, therefore, the objective of the present invention to provide a scooter-type vehicle as indicated above, in which the space required for arranging the fuel supply pipe and for swinging movement of the fuel supply pipe is reduced compared to the prior situation discussed above.

This objective is solved in an inventive manner by a scooter-type vehicle according to claim 1 and a scooter-type vehicle according to claim 6. Such a vehicle comprises, inter alia, a body frame, a power unit swingably coupled to the body frame, a fuel tank mounted on the body frame, and a fuel supply pipe connecting the fuel tank and a connecting portion on the power unit side, wherein the fuel supply pipe is composed of a fixed portion fixed to the body frame, and a flexible portion extending between the fixed portion and the connecting portion on the side of the power unit.

Preferably, the power unit is integrally constituted by an engine and a power transmitting device.

Further, preferably the fixed portion is fixed to the body frame at a position deviated forward or backward in the vehicle longitudinal direction with respect to the connecting portion on the side of the power unit.

The flexible portion is composed of a first extending portion extending in a fore-and-aft direction of the vehicle, a curved portion continuously curved from the first extending portion and, a second extending portion extending in a vehicle-width direction continuously from the curved portion between the fixed portion and the connecting portion on the side of the power unit.

Therein, it is beneficial for the vehicle of claim 1 that the first extending portion extends in the fore-and-aft direction of the vehicle from the fixed portion, the curved portion curves in the vehicle-width direction from the first extending portion, and the second extending portion extends in the vehicle-width direction from the curved portion to be connected to the connecting portion on the side of the power unit.

It is further beneficial if the fixed portion is fixed at a position deviated to one side in the vehicle-width direction, and the first extending portion is arranged at a position deviated to one side in the vehicle-width direction.

It is still further beneficial if the connecting portion on the side of the power unit of the fuel supply pipe has a relative operating range moving against the body frame when the power unit swings, and the first extending portion extends toward a position deviated in the vehicle-width direction with respect to a central portion of the operating range.

According to the vehicle of claim 6, the second extending portion extends in the vehicle-width direction from the fixed portion, the curved portion curves in the fore-and-aft direction of the vehicle from the second extending portion, and the first extending portion extends in the fore-and-aft direction of the vehicle from the curved portion to be connected to the connecting portion on the side of the power unit.

It is further beneficial if the connecting portion on the side of the power unit of the fuel supply pipe has a relative operating range moving against the body frame when the power unit swings, and the second extending portion extends toward a position deviated in the fore-and-aft direction of the vehicle with respect to the central portion of the operating range.

Therein, the fuel supply pipe may be a formed pipe.

Preferably, the curved portion is curved so that the first extending portion and the second extending portion forms a right angle under the condition that a rider rides on the scooter-type vehicle.

Further, preferably the power unit has a fuel injection valve, and the fuel supply pipe connects between the fuel tank and the fuel injection valve.

The curved portion extending between the first and second extending portions has a higher stiffness than said extending portions.

In the following, the present invention is explained in greater detail with respect to several embodiments thereof in conjunction with the accompanying drawings, wherein:
- FIG. 1: is a side view of a scooter-type vehicle according to one embodiment,
- FIG. 2: is a plan view showing a body frame of the scooter-type vehicle according to one embodiment,
- FIG. 3: is a side view of a fuel supply pipe of the scooter-type vehicle according to one embodiment,
- FIG. 4: is a plan view of a fuel supply pipe of the scooter-type vehicle according to one embodiment,
- FIG. 5: is a side view of a scooter-type vehicle according to another embodiment,
- FIG. 6: is a side view of a scooter-type vehicle according to still another embodiment,
- FIG.7: is a side view of a scooter-type vehicle according to a still another embodiment,
- FIG. 8: is a plan view showing a body frame of the scooter-type vehicle according to a still another embodiment,
- FIG.9: is a side view of a scooter-type vehicle according to a still another embodiment, and
- FIG. 10: is a plan view showing a body frame of the scooter-type vehicle according to a still another embodiment.

### Description of Reference Numerals:

- 100:: scooter-type vehicle
- 101:: body frame
- 102:: power unit
- 102a:: connecting portion of fuel supply pipe on a side of power unit
- 103:: fuel tank
- 104:: fuel supply pipe
- 111:: head pipe
- 112:: down tube
- 113, 114:: back stay
- 115 to 118:: cross member
- 121:: front fork
- 122:: steering handle bars
- 123:: front wheel
- 124:: storage box
- 125:: seat
- 126:: coupling portion
- 127:: cushion unit
- 128:: attachment portion
- 130:: link mechanism
- 141:: engine
- 142:: power transmitting device
- 143:: coupling portion
- 145:: fuel injection valve
- 151:: fixed portion
- 152:: first extending portion
- 153:: second extending portion
- 154:: curved portion
- 160:: clamping member

A scooter-type vehicle according to an embodiment is described below with reference to the accompanying drawings. Incidentally, the scooter-type vehicle of the present teaching should not be limited to the embodiment described below. The same reference numeral is given for a member or a part which has a same function. The terms "front", "rear", "left", "right", "up" and "down" used herein with respect to a vehicle body are defined as the directions in which a rider views at a normal riding position. Further, a vehicle-width direction is equivalent to the left and right direction mentioned above. In addition, each drawing is shown in direction of the reference numeral.

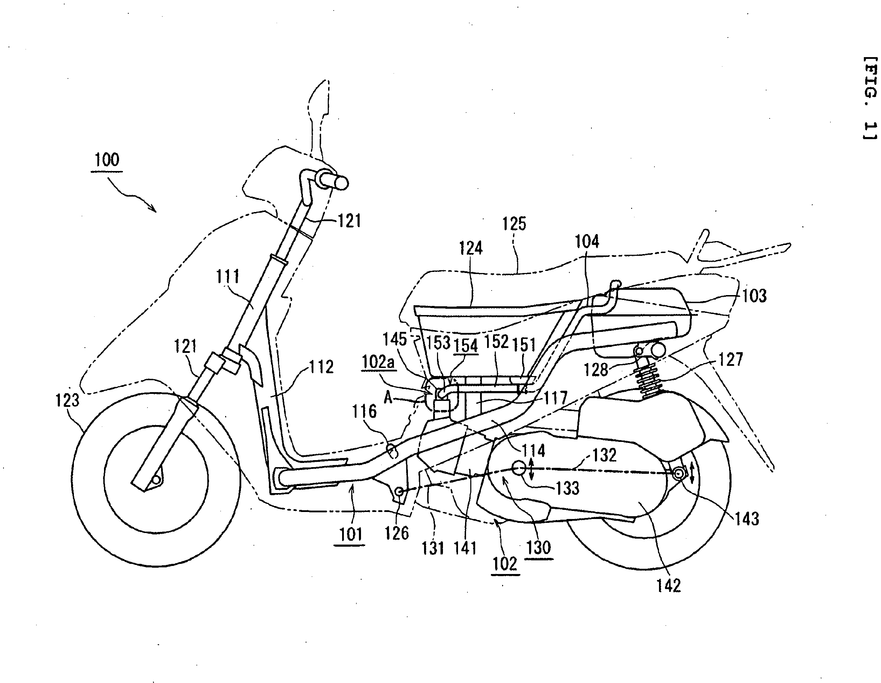

As shown in FIG. 1, a scooter-type vehicle 100 includes a body frame 101, a power unit 102 swingably coupled to the body frame 101 and supported by a cushion unit 127 disposed between the power unit 102 and the body frame 101, a fuel tank 103 mounted on the body frame 101, and a fuel supply pipe 104 connected between the fuel tank 103 and a connecting portion 102a on the side of the power unit 102. The fuel supply pipe 104 has a fixed portion 151 fixed to the body frame at a position deviated forward or backward with respect to a connecting portion on the side of a power unit. Further, between the fixed portion 151 and the connecting portion on the power unit 102 side, the fuel supply pipe 104 has a first extending portion 152 extending in a fore-and-aft direction of the vehicle, a curved portion 154 continuously curved from the first extending portion 152, and a second extending portion 153 extending in a vehicle-width direction continuously from the curved portion 154.

According to the scooter-type vehicle 100, because the fuel supply pipe 104 is fixed to the body frame 101, it does not swing intensely as a whole even though the power unit 102 swings upward and downward or forward and backward against the body frame 101. When the power unit 102 swings against the body frame 101, the fuel supply pipe 104 reasonably deforms according to the movement of the power unit 102, thereby eliminating necessity to provide a large space for arranging the fuel supply pipe 104.

Now, the constitution of the scooter-type vehicle 100 will be specifically described below.

The scooter-type vehicle 100 of this embodiment includes, as shown in FIG. 1, the body frame 101, the power unit 102, the fuel tank 103 and the fuel supply pipe 104.

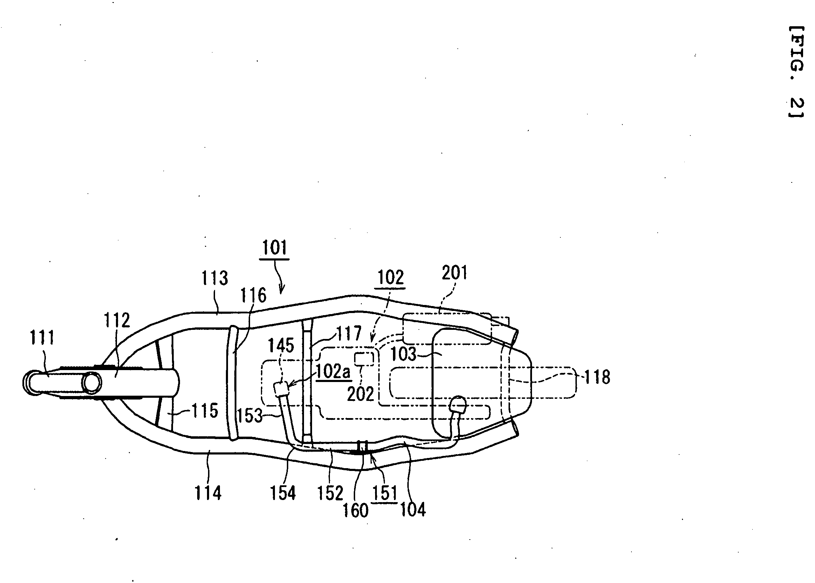

As shown FIGs. 1 and 2, the body frame 101 is formed by fixing together with a head pipe 111, a down tube 112, a pair of left and right back stays 113, 114, and cross members 115 to 118. Chain double-dashed lines in FIG. 1 represent an outline of the scooter-type vehicle 100.

As shown in FIG. 1, the head pipe 111 is fixed to a front portion of the down tube 112, and a front fork 121 is attached to the head pipe. A handlebar 122 is connected to an upper end of the front fork 121, and a front wheel 123 is attached to a lower end of the front fork 121. As shown in FIG. 1, the pair of left and right back stays 113, 114 extending backward is fixed to a rear portion of the down tube 112. The cross members 115 to 118 are disposed between the pair of left and right back stays 113, 114 at a plurality of positions spaced along the fore-and-aft direction.

In this embodiment, the cross member 117 disposed between the middle parts of the back stays 113, 114 extends upward and is provided with a storage box 124. The fuel tank 103 is mounted on the cross member 118 disposed between the rear parts of the back stays 113, 114. The back stays 113, 114 further have a coupling portion 126 connected to the power unit 102 on their middle parts and an attachment portion 128 to which the cushion unit 127 is attached on their rear parts.

As shown in FIG. 1, the power unit 102 is swingably connected to the coupling portion 126 of the body frame 101 via a link mechanism 130 and supported by the cushion unit 127 disposed between the power unit 102 and the body frame 101. In FIG. 1, a long dashed short-dashed line 131 shows a link for connecting the power unit 102 and the coupling portion 126, a long dashed short-dashed line 132 shows a link constituted by the power unit 102, and a circle 133 shows a joint for connecting the power unit 102 and the link 131.

In this embodiment, the power unit 102 is integrally constituted by an engine 141 and a power transmitting device 142.

The power unit 102 is positioned such that the side of its engine 141 directs forward and the side of its power transmitting device 142 directs backward with respect to the body frame 101. A front part of the power unit 102 is swingably connected to the coupling portion 126 disposed between the middle parts of the back stays 113, 114 of the body frame 101 via the link mechanism 130. A rear part of the power unit 102 is attached to the body frame 101 via the cushion unit 127. The cushion unit 127 is a resilient member, both ends of which are swingably attached to the attachment portion 128 disposed between the rear parts of the back stays 113, 114 of the body frame 101 and to a coupling portion 143 on a rear part of the power unit 102 respectively.

Accordingly, while the vehicle is driven, the power unit 102 swings upward and downward or forward and backward against the body frame 101 in response to conditions such as irregularities of a road surface. In this embodiment, an amplitude of swinging in a vertical or longitudinal direction of the power unit 102 depends on the moving range of the link mechanism 130 and the resilient performance of the cushion unit 127.

In this embodiment, a fuel injection is attached to the engine 141. The fuel injection is a device which controls the supply amount of fuel to be supplied to the engine 141 and has a fuel injection valve 145. As shown in FIGs. 1 and 2, the fuel supply pipe 104 is disposed between the fuel tank 103 and the connecting portion 102a on the side of the power unit 102. In this embodiment, the fuel supply pipe 104 is connected to the fuel injection valve 145 of the fuel injection attached to the engine 141 of the power unit 102. The connecting portion 102a on the side of the power unit 102 of the fuel supply pipe 104 swings relative to the body frame 101 when the power unit 102 swings. An operating range (swinging range) of the connecting portion 102a on the side of the power unit 102 of the fuel supply pipe 104 is shown by a broken line (A) in FIG. 1.

In this embodiment, the fuel supply pipe 104 has the fixed portion 151, the first extending portion 152, the second extending portion 153, and the curved portion 154. FIG. 2 is a plan view of the body frame 101. In FIG. 2, reference numerals 103, 104, and 145 respectively denote the fuel tank, the fuel supply pipe, and the fuel injection valve. In this embodiment, the connecting portion 102a on the side of the power unit 102 of the fuel supply pipe 104 is connected to the fuel injection valve 145. Also, in this embodiment, the fuel tank 103 is positioned at the rear of the fuel injection valve 145. Specifically, the fuel tank 103 is positioned at the rear of the storage box 124 below a seat 125 disposed on the power unit 102.

The fixed portion 151 is a portion fixed to the body frame 101. In this embodiment, the fuel supply pipe 104 extends from the fuel tank 103 along the body frame 101. As shown in FIG. 2, the fixed portion 151 is fixed to the body frame 101 at a position deviated backward with respect to the connecting portion of the power unit 102 side of the fuel supply pipe 104. Specifically, in this embodiment, the fixed portion 151 is positioned at the middle part of the fuel supply pipe 104 and fixed by a clamping member 160 attached to the body frame 101. The fixed portion 151 is also positioned at the rear of the connecting portion 102a on the side of the power unit 102. Further, in this embodiment, the fixed portion 151 is fixed to a position deviated (to the left, in this embodiment) in the vehicle-width direction with respect to the connecting portion 102a on the side of the power unit 102. In this embodiment, the fixed portion 151 is fixed to the left back stay 114 of the body frame 101.

The first extending portion 152 of the fuel supply pipe 104 extends in the fore-and-aft direction of the vehicle from the fixed portion 151. In this embodiment, when the power unit 102 swings, the connecting portion 102a on the side of the power unit 102 of the fuel supply pipe 104 swings relative to the body frame 101. In this regard, the operating rage of the connecting portion 102a is defined as an operating range (A). The first extending portion 152 extends toward a position deviated in the vehicle-width direction with respect to a central portion of the operating range (A).

In this embodiment, the fixed portion 151 is fixed to a position deviated to the left in the vehicle-width direction with respect to the connecting portion 102a on the side of the power unit 102 and the first extending portion 152 is positioned deviated to one side (to the left, in this embodiment) in the vehicle-width direction. The curved portion 154 continuously curves from the first extending portion 152. In this embodiment, the curved portion 154 curves in the vehicle-width direction (right direction, in this embodiment) continuously from the first extending portion 152. The second extending portion 153 of the fuel supply pipe 104 extends in the vehicle-width direction continuously from the curved portion 154. More specifically, in this embodiment, the first extending portion 152 extends in the fore-and-aft direction of the vehicle from the fixed portion 151. Then, the curved portion 154 curves in the vehicle-width direction from the first extending portion 152, and the second extending portion 153 extends in the vehicle-width direction from the curved portion 154 to be connected to the connecting portion 102a on the side of the power unit 102.

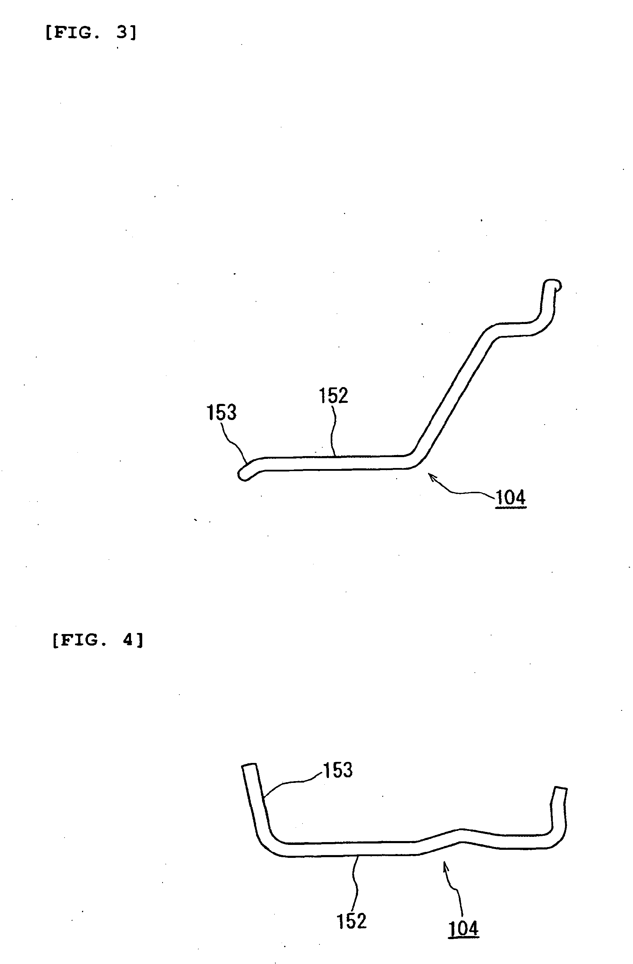

In this embodiment, the fuel supply pipe 104 is formed by a formed pipe as shown in FIGs. 3 and 4. That is, in this embodiment, the fuel supply pipe 104 made of rubber between the fuel tank 103 and the connecting portion 102a is formed in a predetermined shape as described above. As shown in FIGs. 1 and 2, the portions of the fuel supply pipe 104 between the fixed portion 151 and the connecting portion 102a on the side of the power unit 102 mainly makes elastic deformation in a reasonable manner in response to a swinging movement of the power unit 102 against the body frame 101. In this embodiment, the curved amount of the curved portion 154 is set so that the first extending portion 152 and the second extending portion 153 are disposed in a right angle under the condition that a rider rides on the scooter-type vehicle 100. Accordingly, the fuel supply pipe 104 elastically deforms in response to the swinging movement of the power unit 102 based on the condition that the rider rides on the vehicle. Therefore, deformation of the fuel supply pipe 104 can be suppressed to be small during a running of the vehicle. In this embodiment, since respective heights of the fixed portion 151 of the fuel supply pipe 104 and the connecting portion 102a on the side of the power unit 102 of the fuel supply pipe 104 are set generally the same based on the condition that the rider rides on the vehicle, the first extending portion 152 and the second extending portion 153 extend generally horizontally.

According to the scooter-type vehicle 100 thus described, the portions of the fuel supply pipe 104 between the fuel tank 103 and the fixed portion 151 hardly swing even though the power unit 102 swings relative to the body frame 101. Therefore, the fuel supply pipe as a whole does not swing intensely.

Between the fixed portion 151 and the connecting portion 102a on the side of the power unit 102, the fuel supply pipe 104 has a first extending portion 152 extending in the fore-and-aft direction of the vehicle, a curved portion 154 continuously curved to the first extending portion 152, and a second extending portion 153 extending in the vehicle-width direction continuously from the curved portion 154. This scooter-type vehicle 100 reasonably deforms the first extending portion 152 and the second extending portion 153 of the fuel supply pipe 104 according to the upward and downward or forward and backward movement of the power unit 102.

In this embodiment, for example as shown in FIG. 2, a curved portion (curved portion 154) between the first extending portion 152 and the second extending portion 153 has a higher stiffness than other portions. In addition, the first extending portion 152 of the fuel supply pipe 104 extends in the fore-and-aft direction of the vehicle while the second extending portion 153 extends in the vehicle-width direction. In this embodiment, the fuel supply pipe 104 follows the movement of the power unit 102 in such a manner that when the power unit 102 swings vertically against the body frame 101, the first extending portion 152 extending in the fore-and-aft direction of the vehicle mainly swings vertically or twists. On the other hand, the fuel supply pipe 104 also follows the movement of the power unit 102 in such a manner that when the power unit 102 swings longitudinally against the body frame 101, the second extending portion 153 extending in the vehicle-width direction mainly swings longitudinally or the curved amount between the first extending portion 152 and the second extending portion 153 varies. Therefore, a large space is not required for arranging the fuel supply pipe 104 between the fixed portion 151 of the fuel supply pipe 104 and the connecting portion 102a on the side of the power unit 102.

In this embodiment, the first extending portion 152 extends in the fore-and-aft direction of the vehicle from the fixed portion 151 toward a position deviated in the vehicle-width direction with respect to the central portion of the operating range (A). Then, the curved portion 154 curves in the vehicle-width direction from the first extending portion 152, and the second extending portion 153 extends in the vehicle-width direction from the curved portion 154 to be connected to the connecting portion 102a on the side of the power unit 102. Thus, when the power unit 102 swings, the central portion of the operating range (A) is positioned at a center of the moving range of the connecting portion 102a on the side of the power unit 102 of the fuel supply pipe 104. The first extending portion 152 extends toward a position deviated in the vehicle-width direction with respect to the central portion of the operating range (A). In this case, for example, when the power unit 102 swings in the longitudinal direction, the second extending portion 153 connected to the connecting portion 102a on the side of the power unit 102 of the fuel supply pipe 104 is pulled in the longitudinal direction. On this occasion, the first extending portion 152 hardly moves. That is, since the second extending portion 153 extending in the width direction swings in the longitudinal direction, the fuel supply pipe 104 as a whole can move in response to the movement of the connecting portion 102a on the side of the power unit 102. Thus, in this embodiment, the fuel supply pipe 104 as a whole does not deform so much in response to the movement of the power unit 102. Therefore, a space required for arranging the fuel supply pipe 104 between the fixed portion 151 of the fuel supply pipe 104 and the connecting portion 102a on the side of the power unit 102 can be further reduced. "The position deviated in the vehicle-width direction with respect to a central portion of the operating range (A)" includes the proximity around the position as well as the position as far as the first extending portion 152 moves only slightly when the power unit 102 swings as described above.

Incidentally, in this embodiment, the first extending portion 152 extends in the fore-and-aft direction of the vehicle from the fixed portion 151. However, the first extending portion 152 need not to extend strictly in the fore-and-aft direction of the vehicle but may incline slightly with respect to the fore-and-aft direction of the vehicle. Further, the second extending portion 153 curves from the first extending portion 152 and extends in the vehicle-width direction to be connected to the connecting portion on the side of the power unit 102. However, the second extending portion 153 need not to extend strictly in the vehicle-width direction but may incline slightly. For example, the first extending portion 152 may incline approximately 15 degrees with respect to the fore-and-aft direction of the vehicle. Also, the second extending portion 153 may incline approximately 15 degrees with respect to the vehicle-width direction. That is, even though the first extending portion 152 inclines approximately 15 degrees with respect to the fore-and-aft direction of the vehicle and the second extending portion 153 inclines approximately 15 degrees with respect to the vehicle-width direction, the fuel supply pipe deforms in response to the movement of the power unit 102 as described above. On this occasion, the portion of the fuel supply pipe 104 between the fuel tank 103 and the fixed portion 151 hardly swings, and therefore the fuel supply pipe as a whole does not swing intensely.

Further, in this embodiment, the fixed portion 151 is fixed to a position deviated (to the left, in this embodiment) in the vehicle-width direction. The first extending portion 152 is positioned deviated to one side (to the left, in this embodiment) in the vehicle-width direction. Swinging direction of the first extending portion 152 is limited and the swinging amplitude thereof is suppressed. In this embodiment, for example, the first extending portion 152 is positioned along the left lower side of the bottom of the storage box 124 under the seat 125. As the swinging direction of the first extending portion 152 is limited and the swinging amplitude thereof is suppressed, a space through which the first extending portion 152 is arranged can be, for example, obtained by chamfering the left lower side of the bottom of the storage box 124 under the seat 125. Thus, on the scooter-type vehicle 100, when the power unit 102 swings against the body frame 101, the fuel supply pipe 104 reasonably deforms according to the movement of the power unit 102, thereby eliminating necessity to provide a large space for arranging the fuel supply pipe 104. On the other hand, in this embodiment, since the swinging direction of the first extending portion 152 is limited and the swinging amplitude thereof is suppressed, the capacity of the storage box 124 can be increased. Since deformation of the fuel supply pipe 104 is thus limited and suppressed, arranging space for the fuel supply pipe 104 can be reduced, thereby achieving flexibility in arranging other component members.

In the scooter-type vehicle 100, as described above, the fuel injection is employed so that the fuel delivered through the fuel supply pipe 104 by a pump (not shown) is substantially pressurized. Accordingly, as the fuel supply pipe 104, a pipe with a required thickness which withstands such a fuel pressure is used. Thus, when the fuel injection is employed for example, a pipe with high stiffness and with low flexibility is employed as the fuel supply pipe 104. In this embodiment, because the fuel supply pipe 104 deforms reasonably described above, the scooter-type vehicle 100 preferably employs a fuel supply pipe with high stiffness and with low flexibility.

Further, in this embodiment, as shown in FIG. 2, the fuel supply pipe 104 is arranged along the left side back stay of the scooter-type vehicle 100. On the other hand, electrical components such as an exhaust silencer (muffler) 201, a generator 202 and so on are disposed on the right side of the scooter-vehicle 100. Accordingly, the fuel supply pipe 104 can be arranged separately from the electrical components such as the exhaust silencer 201 (muffler), the generator 202 and so on. Thus, in this embodiment, heat sources and the electrical components are collected on one side on the scooter-type vehicle 100, while the fuel supply pipe 104 is disposed on the opposite side, thereby locating the fuel supply pipe 104 away from the heat sources and the electrical components. In this way, an appropriate fuel supply can be achieved thereby preventing a fuel flowing through the fuel supply pipe from being affected by heat generated by these devices.

Though the scooter-type vehicle according to an embodiment of the present teaching has been described, the scooter-type vehicle according to this teaching is not limited to the embodiment described above.

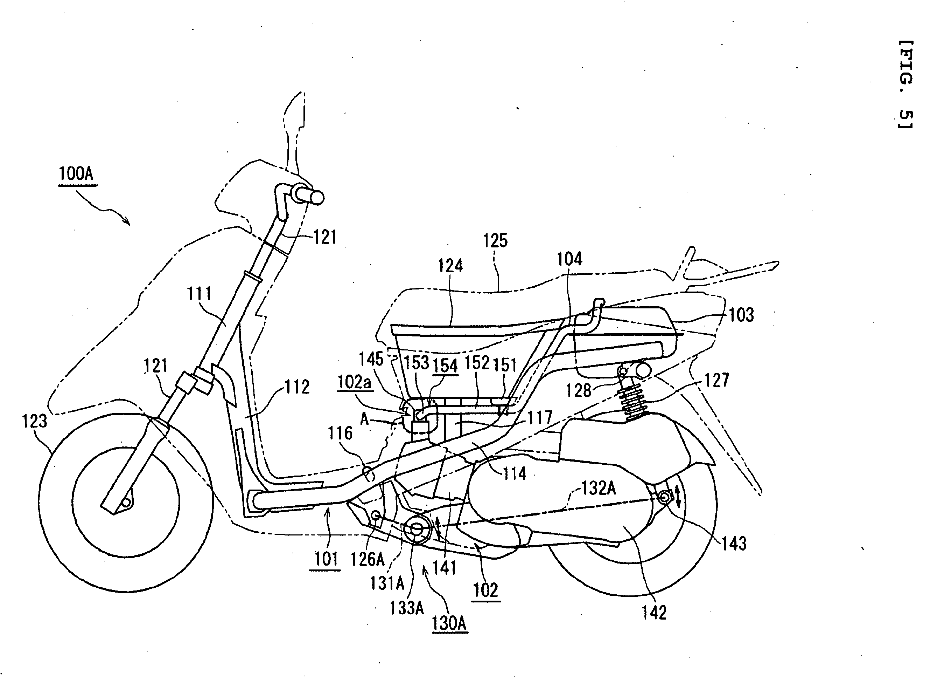

For example, a shape of the body frame, a structure of the body frame, presence or absence of a fuel injection (fuel injection valve) on the power unit, a constitution of the link mechanism which supports the power unit, a structure of the cushion unit or the like can have various modifications. In accordance with another embodiment of a scooter-type vehicle 100A, a link mechanism 130A includes, for example as shown in FIG. 5, a link member 131A swingably coupled to a coupling portion 126A of a bracket attached to a lower portion to which a seat of the body frame 101 is attached. One end of the power unit 102 is swingably coupled to a tip end of the link member 131A and the other end of the power unit 102 is coupled to a tip end of the cushion unit 127. In FIG. 5, a dashed line 131A shows a link for connecting the power unit 102 and the coupling portion 126A, a long dashed short-dashed line 132A shows a link constituted by the power unit 102, and a circle 133 shows a joint for connecting the power unit 102 and the link 131A.

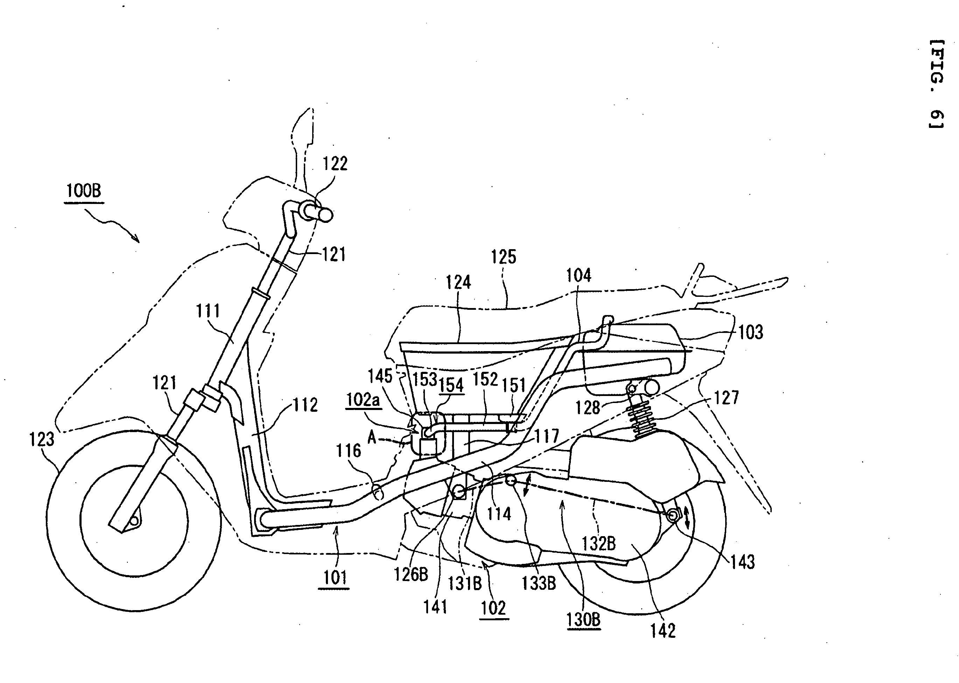

In accordance with a still another embodiment of a scooter-type vehicle 100B, a link mechanism 130B includes, for example as shown in FIG. 6, a link member 131 B swingably coupled to a coupling portion 126B of a bracket attached above the power unit 102 on the rear part of the body frame 101. One end of the power unit 102 is swingably coupled to a tip end of the link member 131 B, and the other end of the power unit 102 is coupled to a tip end of the cushion unit 127. In FIG. 6, a dashed line 131B shows a link for connecting the power unit 102 and the coupling portion 126B, a dashed line 132B shows a link constituted by the power unit 102, and a circle 133B shows a joint for connecting the power unit 102 and the link 131B. The relative operating range (A) in which the connecting portion on the side of the power unit moves against the body frame when the power unit swings is vertically extended in this scooter-type vehicle in comparison with the scooter-type vehicle shown in FIGs. 1 and 2.

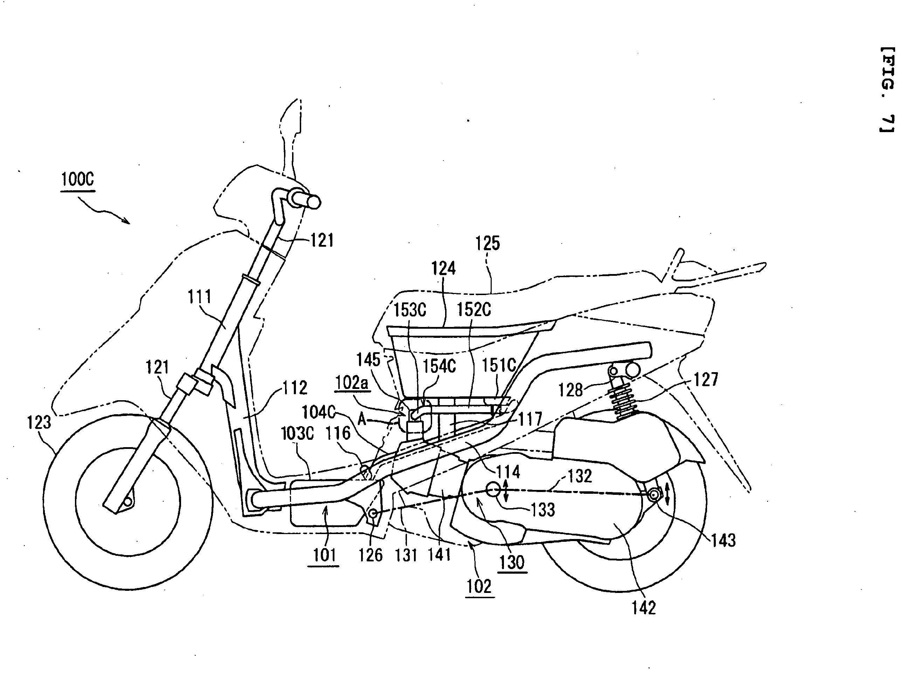

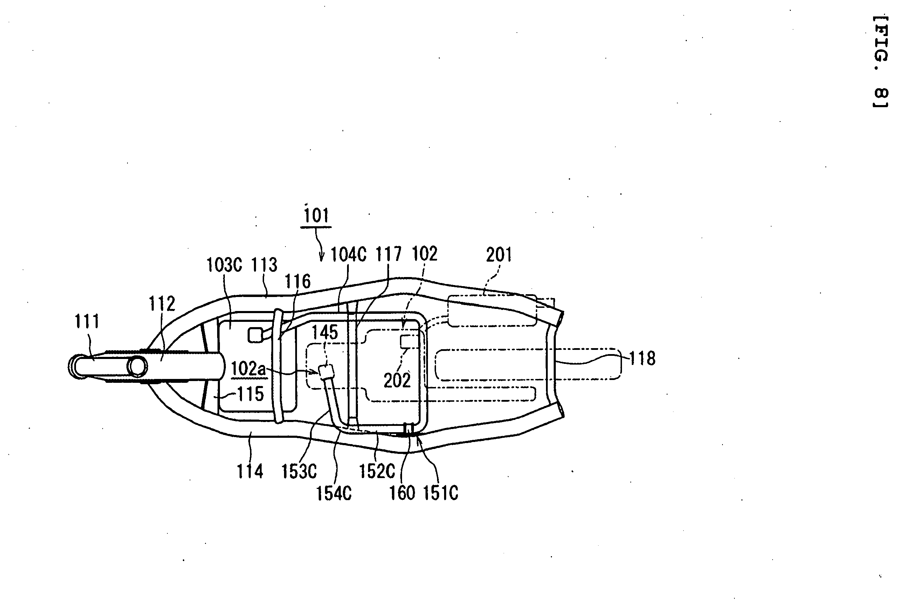

In the embodiment shown in FIGs. 1 and 2, the fuel tank 103 is disposed at the rear part of the body frame 101. However, the position of the fuel tank is not limited to this. The fuel tank 103 may be disposed at any location on the vehicle. In accordance with a still another embodiment of the scooter-type vehicle 100C as shown in FIGs. 7 and 8, a fuel tank 103C may be located in a front side of the power unit 102. In this embodiment, the fuel tank 103C is disposed in the front side of the power unit 102. A fuel supply pipe 104C is arranged at a position deviated backward with respect to the connecting portion 102a on the side of the power unit 102 and fixed to the body frame 101 at the position as shown in FIG. 8. In FIG. 8, reference numerals 151C, 152C, 153C and 154C respectively denote a fixed portion, a first extending portion, a second extending portion, and a curved portion of the fuel supply pipe 104C.

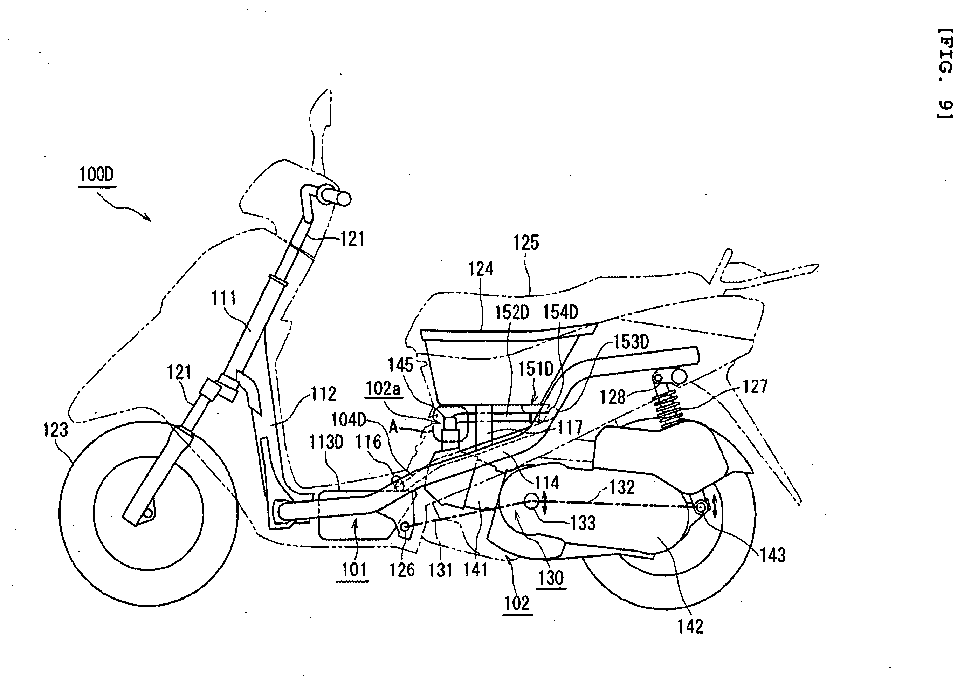

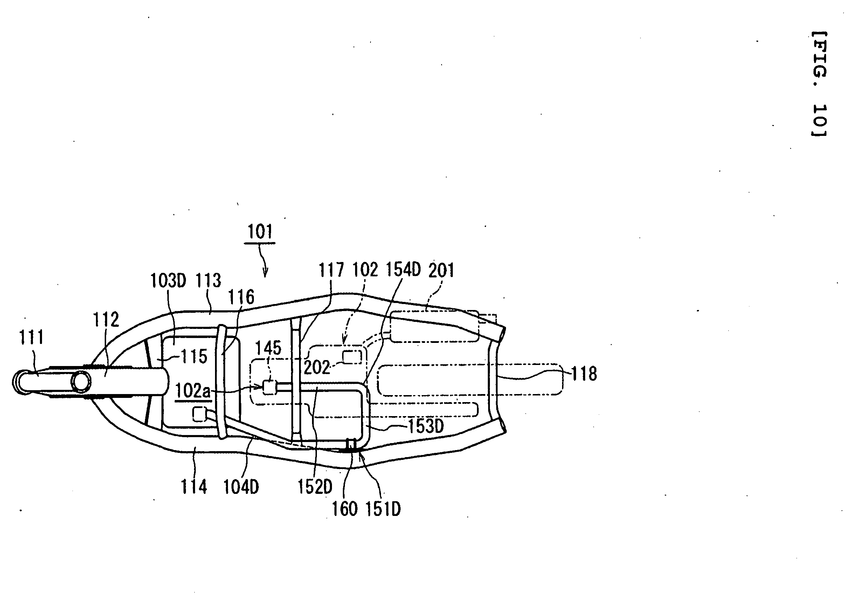

In accordance with a still another embodiment of the scooter-type vehicle 100D as shown in FIGs. 9 and 10, a fuel tank 103D is located in the front side of the power unit 102. As shown in FIG. 10, a fuel supply pipe 104D is extended backward from the fuel tank 103D along one side of the back stay (left side back stay 114, in this embodiment) of the body frame 101 and fixed on the back stay 114. In this embodiment, a second extending portion 153D of the fuel supply pipe 104D extends from a fixed potion 151 D toward a position deviated in the fore-and-aft direction of the vehicle with respect to a central portion of the operating range (A) of the connecting portion 102a on the side of the power unit 102. In this embodiment, the second extending portion 153D extends from the fixed potion 151 D toward a position deviated backward with respect to the central portion of the operating range (A). A curved portion 154D is curved continuously from the second extending portion 153D in the fore-and-aft direction of the vehicle (toward the front, in this embodiment). A first extending portion 152D extends in the fore-and-aft direction of the vehicle from the curved portion 154D to be connected to the connecting portion 102a on the side of the power unit 102.

In this embodiment, the second extending portion 153D extends in the vehicle-width direction from the fixed portion 151D toward a position deviated in the fore-and-aft direction of the vehicle with respect to the central portion of the operating range (A) of the connecting portion 102a on the side of the power unit 102 described above. Then, the curved portion 154D curves in the fore-and-aft direction of the vehicle from the second extending portion 153D and the first extending portion 152D extends in the fore-ond-aft direction of the vehicle from the curved portion 154D to be connected to the connecting portion 102a on the side of the power unit 102. Thus, when the power unit 102 swings, the central portion of the operating range (A) is positioned at a center of the moving range of the connecting portion 102a on the side of the power unit 102 of the fuel supply pipe 104D. The second extending portion 153D extends toward a position deviated in the fore-and-aft direction of the vehicle with respect to the central portion of the operating range (A). In this case, for example, when the power unit 102 swings in the longitudinal direction, a connecting end of the first extending portion 152D connected to the connecting portion 102a on the side of the power unit 102 of the fuel supply pipe 104D is pulled in the longitudinal direction. That is, since the second extending portion 153D extending in the width direction swings in the longitudinal direction, the fuel supply pipe 104D as a whole can move in response to the movement of the connecting portion 102a on the side of the power unit 102. Thus, in this embodiment, the fuel supply pipe 104D as a whole does not deform so much in response to the movement of the power unit 102. Therefore, a space required for arranging the fuel supply pipe 104D between the fixed portion 151 D of the fuel supply pipe 104D and the connecting portion 102a on the side of the power unit 102 can be further reduced. "The position deviated in the fore-and-aft direction of the vehicle with respect to a central portion of the operating range (A)" includes the proximity around the position as well as the position as far as the second extending portion 153D moves only slightly when the power unit 102 swings as described above.

Various modified embodiments have been described as above. Each of these fuel supply pipes (104A through 104D) includes the first extending portion (152A through 152D), the curved portion (154A through 154D) and the second extending portion (153A through 153D) between the fixed portion (151A through 151D) and the connecting portion 102a on the side of the power unit 102. The first extending portion (152A through 152D) extends in the longitudinal direction and the curved portion (154A through 154D) curves continuously from the first extending portion (152A through 152D). The second extending portion (153A through 153D) extends in the width direction continuously from the curved portion (154A through 154D). When these scooter-type vehicles 100A through 100D run, the power unit swings upward and downward or forward and backward in response to conditions such as irregularities of a road surface. The fuel supply pipe (104A through 104D) reasonably deforms in response to the upward and downward or forward and backward movement of the power unit 102. In this regard, swinging directions of the first extending portion (152A through 152D) and second extending portion (153A through 153D) are limited and the swinging amplitudes thereof are suppressed. Therefore, a large space is not required for arranging the fuel supply pipe (104A through 104D) between the fixed portion (151A through 151D) of the fuel supply pipe (104A through 104D) and the connecting portion 102a on the side of the power unit 102.

The fixed portion for fixing the fuel supply pipe to the body frame may be arranged at a position deviated forward with respect to the connecting portion on the side of the power unit, which is not shown. In this regard, between the fixed portion and the connecting portion on the side of the power unit, the fuel supply pipe has the first extending portion extending in the fore-and-aft direction of the vehicle, the curved portion continuously curved from the first extending portion and the second extending portion extending in the vehicle-width direction continuously from the curved portion.

As described above, according to the present teaching, a space required for arranging a fuel supply pipe can be reduced.

The description above discloses (amongst others) an embodiment of a scooter-type vehicle which includes: a body frame; a power unit swingably coupled to the body frame and supported by a cushion unit disposed between the power unit and the body frame; a fuel tank mounted on the body frame; and a fuel supply pipe connected between the fuel tank and a connecting portion on the power unit side. The fuel supply pipe has a fixed portion fixed to the body frame at a position deviated forward or backward with respect to a connecting portion on the power unit side. Further, between the fixed portion and the connecting portion on the power unit side, the fuel supply pipe has a first extending portion extending in a fore-and-aft direction of the vehicle, a curved portion continuously curved from the first extending portion and a second extending portion extending in a vehicle-width direction continuously from the curved portion.

According to the effect of this embodiment of a scooter-type vehicle, because the fuel supply pipe is fixed to the body frame, it does not swing intensely as a whole even though the power unit swings upward and downward or forward and backward against the body frame. Further, between the fixed portion and the connecting portion on the power unit side, the fuel supply pipe has a first extending portion extending in a fore-and-aft direction of the vehicle, a curved portion continuously curved from the first extending portion and a second extending portion extending in a vehicle-width direction continuously from the curved portion. This scooter-type vehicle reasonably deforms the first extending portion and the second extending portion of the fuel supply pipe according to the upward and downward or forward and backward movement of the power unit. Therefore, a large space is not required for arranging the fuel supply pipe between the fixed portion and the connecting portion on the power unit side.

The description above further discloses, in order to provide an arranging structure of a fuel supply pipe which can reduce a space for arranging the fuel supply pipe, an embodiment of a fuel supply pipe 104 of a scooter-type vehicle 100 which includes a fixed portion 151 fixed to a body frame at a position deviated forward or backward with respect to a connecting portion 102a on the side of a power unit 102. The fuel supply pipe 104 has a first extending portion 152 extending in a fore-and-aft direction of the vehicle from the fixed portion 151, a curved portion 154 continuously curved to the first extending portion 152, and a second extending portion 153 extending in a vehicle-width direction continuously from the curved portion 154 between the fixed portion 151 and the connecting portion 102a on the side of the power unit 102.

The description further discloses, according to a preferred first aspect, a scooter-type vehicle comprising: a body frame; a power unit swingably coupled to the body frame and supported by a cushion unit disposed between the power unit and the body frame; a fuel tank mounted on the body frame; and a fuel supply pipe connected between the fuel tank and a connecting portion on the side of the power unit, wherein the fuel supply pipe has a fixed portion fixed to the body frame at a position deviated forward or backward with respect to the connecting portion on the side of the power unit and further has a first extending portion extending in a fore-and-aft direction of the vehicle, a curved portion continuously curved from the first extending portion and, a second extending portion extending in a vehicle-width direction continuously from the curved portion between the fixed portion and the connecting portion on the side of the power unit.

Further, according to a preferred second aspect, the first extending portion extends in the fore-and-aft direction of the vehicle from the fixed portion, the curved portion curves in the vehicle-width direction from the first extending portion, and the second extending portion extends in the vehicle-width direction from the curved portion to be connected to the connecting portion on the side of the power unit.

Further, according to a preferred third aspect, the fixed portion is fixed at a position deviated to one side in the vehicle-width direction and the first extending portion is arranged at a position deviated to one side in the vehicle-width direction.

Further, according to a preferred fourth aspect, the connecting portion on the side of the power unit of the fuel supply pipe has a relative operating range moving against the body frame when the power unit swings, and the first extending portion extends toward a position deviated in the vehicle-width direction with respect to a central portion of the operating range.

Further, according to a preferred fifth aspect, the second extending portion extends in the vehicle-width direction from the fixed portion, the curved portion curves in the fore-and-aft direction of the vehicle from the second extending portion, and the first extending portion extends in the fore-and-aft direction of the vehicle from the curved portion to be connected to the connecting portion on the side of the power unit.

Further, according to a preferred sixth aspect, the connecting portion on the side of the power unit of the fuel supply pipe has a relative operating range moving against the body frame when the power unit swings, and the second extending portion extends toward a position deviated in the fore-and-aft direction of the vehicle with respect to the central portion of the operating range.

Further, according to a preferred seventh aspect, the fuel supply pipe is a formed pipe.

Further, according to a preferred eighth aspect, the curved portion is curved so that the first extending portion and the second extending portion forms a right angle under the condition that a rider rides on the scooter-type vehicle.

Further, according to a preferred ninth aspect, the power unit has a fuel injection valve, and the fuel supply pipe connects between the fuel tank and the fuel injection valve.

## Claims

1. Scooter-type vehicle (100A; 100B; 100C; 100D) comprising:
a body frame (101),
a power unit (102) swingably coupled to the body frame (101),
a fuel tank (103A; 103C; 103D) mounted on the body frame (101), and
a fuel supply pipe (104A; 104C; 104D) connecting the fuel tank (103A; 103C; 103D) and
a connecting portion (102a) on the power unit side (102),
wherein the fuel supply pipe (104A; 104C; 104D) is composed of a fixed portion (151A; 151C; 151D) fixed to the body frame (101), and a flexible portion (152, 153, 154; 152C,153C,154C; 152D,153D,154D) extending between the fixed portion (151A; 151C; 151D) and the connecting portion (102a) on the side of the power unit (102), and
wherein the flexible portion (152,153,154; 152C,153C,154C; 152D,153D,154D) is composed of
a first extending portion (152; 152C; 152D) extending in a fore-and-aft direction of the vehicle,
a curved portion (154; 154C; 154D) continuously curved from the first extending portion (152; 152C; 152D), and
a second extending portion (153; 153C; 153D) extending in a vehicle-width direction continuously from the curved portion (154; 154C; 154D) between the fixed portion (151A;
151C; 151D) and the connecting portion (102a) on the side of the power unit (102);
the first extending portion (152; 152C; 152D) extends in the fore-and-aft direction of the vehicle from the fixed portion (151A; 151C; 151D), the curved portion (154; 154C; 154D) curves in the vehicle-width direction from the first extending portion (152; 152C; 152D),
and the second extending portion (153; 153C; 153D) extends in the vehicle-width direction from the curved portion (154; 154C; 154D) to be connected to the connecting portion (102a) on the side of the power unit (102), **characterized in that**
the curved portion (154; 154C; 154D) extending between the first and second extending portions (152,153) has a higher stiffness than said first and second extending portions (152, 153).

2. Scooter-type vehicle according to claim 1, **characterized in that** the power unit (102) is integrally constituted by an engine (141) and a power transmitting device (142).

3. Scooter-type vehicle according to claim 1 or 2, **characterized in that** the fixed portion (151A; 151C; 151D) is fixed to the body frame (101) at a position deviated forward or backward in the vehicle longitudinal direction with respect to the connecting portion (102a) on the side of the power unit (102).

4. Scooter-type vehicle according to claim 1 to 3, **characterized in that** the fixed portion (151A; 151C; 151D) is fixed at a position deviated to one side in the vehicle-width direction, and the first extending portion (152; 152C; 152D) is arranged at a position deviated to said one side in the vehicle-width direction.

5. Scooter-type vehicle according to one of the claims 1 to 4, **characterized in that** the connecting portion (102a) on the side of the power unit (102) of the fuel supply pipe (104A; 104C; 104D) has a relative operating range moving against the body frame (101) when the power unit (102) swings, and the first extending portion (152; 152C; 152D) extends toward a position deviated in the vehicle-width direction with respect to a central portion of the operating range (A).

6. Scooter-type vehicle (100A; 1008; 100C; 100D) comprising:
a body frame (101),
a power unit (102) swingably coupled to the body frame (101),
a fuel tank (103A; 103C; 103D) mounted on the body frame (101), and
a fuel supply pipe (104A; 104C; 104D) connecting the fuel tank (103A; 103C; 103D) and
a connecting portion (102a) on the power unit side (102),
wherein the fuel supply pipe (104A; 104C; 104D) is composed of a fixed portion (151A; 151C; 151D) fixed to the body frame (101), and a flexible portion (152,153,154; 152C,153C,154C; 152D,153D,154D) extending between the fixed portion (151A; 151C; 151D) and the connecting portion (102a) on the side of the power unit (102), and
wherein the flexible portion (152,153,154; 152C,153C,154C; 152D,153D,154D) is composed of
a first extending portion (152; 152C; 152D) extending in a fore-and-aft direction of the vehicle,
a curved portion (154; 154C; 154D) continuously curved from the first extending portion (152; 152C; 152D), and
a second extending portion (153; 153C; 153D) extending in a vehicle-width direction continuously from the curved portion (154; 154C; 154D) between the fixed portion (151A;
151C; 151D) and the connecting portion (102a) on the side of the power unit (102);
**characterized in that**
the second extending portion (153; 153C; 153D) extends in the vehicle-width direction from the fixed portion (151A; 151C; 151D), the curved portion (154; 154C; 154D) curves in the fore-and-aft direction of the vehicle from the second extending portion (153; 153C;
153D), and the first extending portion (152; 152C; 152D) extends in the fore-and-aft direction of the vehicle from the curved portion (154; 154C; 154D) to be connected to the connecting portion (102a) on the side of the power unit (102), wherein
the curved portion (154; 154C; 154D) extending between the first and second extending portions (152,153) has a higher stiffness than said first and second extending portions (152, 153).

7. Scooter-type vehicle according to claim 6, **characterized in that** the connecting portion (102a) on the side of the power unit (102) of the fuel supply pipe (104A; 104C; 104D) has a relative operating range (A) moving against the body frame (101) when the power unit (102) swings, and the second extending portion (153; 153C; 153D) extends toward a position deviated in the fore-and-aft direction of the vehicle with respect to the central portion of the operating range (A).

8. Scooter-type vehicle according to one of the claims 1 to 7, **characterized in that** the fuel supply pipe (104A; 104C; 104D) is a formed pipe.

9. Scooter-type vehicle according to one of the claims 1 to 8, **characterized in that** the curved portion (154; 154C; 154D) is curved so that the first extending portion (152; 152C;
152D) and the second extending portion (153; 153C; 153D) form a right angle under the condition that a rider rides on the scooter-type vehicle.

10. Scooter-type vehicle according to one of the claims 1 to 9, **characterized in that** the power unit (102) has a fuel injection valve (145), and the fuel supply pipe (104A; 104C; 104D) connects between the fuel tank (103A; 103C; 103D) and the fuel injection valve (145).

## Patentansprüche

1. Fahrzeug (100A; 100B; 100C; 100D) vom Roller- Typ, aufweisend:
einen Karosserierahmen (101),
eine Antriebseinheit (102), schwingbar gekuppelt mit dem Karosserierahmen (101),
einen Kraftstofftank (103A; 103C; 103D), montiert an dem Karosserierahmen (101), und
eine Kraftstoffzuführungsleitung (104A; 104C; 104D), die den Kraftstofftank (103A; 103C; 103D) und einen Verbindungsabschnitt (102a) auf der Seite der Antriebseinheit (102) verbindet,
wobei die Kraftstoffzuführungsleitung (104A; 104C; 104D) zusammengesetzt ist aus einem feststehenden Abschnitt (151A; 151 C; 151 D), befestigt an dem Karosserierahmen (101), und einem flexiblen Abschnitt (152, 153, 154; 152C, 153C,
154C; 152D, 153D, 154D), der sich zwischen dem feststehenden Abschnitt (151A; 151C; 151D) und dem Verbindungsabschnitt (102a) auf der Seite der Antriebseinheit (102) erstreckt, und
wobei der flexible Abschnitt (152, 153, 154; 152C, 153C, 154C; 152D, 153D,
154D) zusammengesetzt ist aus
einem ersten Erstreckungsabschnitt (152; 152C; 152D), der sich in einer Vorwärts- / und Rückwärts- Richtung des Fahrzeuges erstreckt,
einem gekrümmten Abschnitt (154; 154C; 154D), kontinuierlich von dem ersten Erstreckungsabschnitt (152; 152C; 152D) gekrümmt, und
einen zweiten Erstreckungsabschnitt (153; 153C; 153D), der sich kontinuierlich in einer Richtung der Fahrzeugbreite von dem gekrümmten Abschnitt (154; 154C;
154D) zwischen dem feststehenden Abschnitt (151A; 151C; 151D) und dem Verbindungsabschnitt (1 02a) auf der Seite der Antriebseinheit (102) erstreckt;
wobei sich der erste Erstreckungsabschnitt (152; 152C; 152D) in der Vorwärts- /und Rückwärts- Richtung des Fahrzeuges von dem feststehenden Abschnitt (151A; 151C; 151D) erstreckt, sich der gekrümmte Abschnitt (154; 154C; 154D) in der Richtung der Fahrzeugbreite von dem ersten Erstreckungsabschnitt (152;
152C; 152D) krümmt, und sich der zweite Erstreckungsabschnitt (153; 153C;
153D) in Richtung der Fahrzeugbreite von dem gekrümmten Abschnitt (154;
154C; 154D) erstreckt, um mit dem Verbindungsabschnitt (102a) auf der Seite der Antriebseinheit (102) verbunden zu sein, **dadurch gekennzeichnet, dass** der gekrümmte Abschnitt (154; 154C; 154D), der sich zwischen dem ersten und
zweiten Erstreckungsabschnitt (152, 153) erstreckt, eine höhere Steifigkeit als der erste und zweite Erstreckungsabschnitt (152, 153) hat.

2. Fahrzeug vom Roller- Typ nach Anspruch 1, **dadurch gekennzeichnet, dass** die Antriebseinheit (102) einstückig durch eine Brennkraftmaschine (141) und eine Leistungsübertragungsvorrichtung (142) gebildet ist.

3. Fahrzeug vom Roller- Typ nach Anspruch 1 oder 2, **dadurch gekennzeichnet, dass** der feststehende Abschnitt (151 A; 151 C; 151D) an dem Karosserierahmen (101) befestigt ist an einem Abschnitt, abgehend nach vorn oder nach hinten in der Längsrichtung des Fahrzeuges in Bezug auf den Verbindungsabschnitt (102a) auf der Seite der Antriebseinheit (102).

4. Fahrzeug vom Roller- Typ nach Anspruch 1 bis 3, **dadurch gekennzeichnet, dass** der feststehende Abschnitt (151A; 151C; 151D) an einer Position auf einer Seite in der Richtung der Fahrzeugbreite befestigt ist und der erste Erstreckungsabschnitt (152; 152C; 152D) an einer Position, abgehend auf der einen Seite in Richtung der Fahrzeugbreite, angeordnet ist.

5. Fahrzeug vom Roller- Typ nach einem der Ansprüche 1 bis 4, **dadurch gekennzeichnet, dass** der Verbindungsabschnitt (1 02a) auf der Seite der Antriebseinheit (102) der Kraftstoffzuführungsleitung (104A; 104C; 104D) einen relativen Betriebsbereich hat, der sich gegen den Karosserierahmen (101) bewegt, wenn die Antriebseinheit (102) schwingt und sich der erste Erstreckungsabschnitt (152; 152C; 152D) erstreckt in Richtung zu einer Position, abgehend in Richtung der Fahrzeugbreite in Bezug auf einen Mittelabschnitt des Betriebsbereiches (A).

6. Fahrzeug (100A; 100B; 100C; 100D) vom Roller- Typ, aufweisend:
einen Karosserierahmen (101),
eine Antriebseinheit (102), schwingbar gekuppelt mit dem Karosserierahmen (101),
einen Kraftstofftank (103A; 103C; 103D), montiert an dem Karosserierahmen (101), und
eine Kraftstoffzuführungsleitung (104A; 104C; 104D), die den Kraftstofftank (103A; 103C; 103D) und einen Verbindungsabschnitt (1 02a) auf der Seite der Antriebseinheit (102) verbindet,
wobei die Kraftstoffzuführungsleitung (104A; 104C; 104D) zusammengesetzt ist aus einem feststehenden Abschnitt (151 A; 151C; 151 D), befestigt an dem Karosserierahmen (101), und einem flexiblen Abschnitt (152, 153, 154; 152C, 153C,
154C; 152D, 153D, 154D), der sich zwischen dem feststehenden Abschnitt (151A; 151C; 151D) und dem Verbindungsabschnitt (102a) auf der Seite der Antriebseinheit (102) erstreckt, und
wobei der flexible Abschnitt (152, 153, 154; 152C, 153C, 154C; 152D, 153D,
154D) zusammengesetzt ist aus
einem ersten Erstreckungsabschnitt (152; 152C; 152D), der sich in einer Vorwärts- / und Rückwärts- Richtung des Fahrzeuges erstreckt,
einen gekrümmten Abschnitt (154; 154C; 154D), kontinuierlich von dem ernsten Erstreckungsabschnitt (152; 152C; 152D) gekrümmt, und
einen zweiten Erstreckungsabschnitt (153; 153C; 153D), der sich kontinuierlich in einer Richtung der Fahrzeugbreite von dem gekrümmten Abschnitt (154; 154C;
154D) zwischen dem feststehenden Abschnitt (151 A; 151C; 151D) und dem Verbindungsabschnitt (102a) auf der Seite der Antriebseinheit (102) erstreckt;
wobei sich der erste Erstreckungsabschnitt (152; 152C; 152D) in der Vorwärts- /und Rückwärts- Richtung des Fahrzeuges von dem feststehenden Abschnitt (151 A; 151 C; 151D) erstreckt, sich der gekrümmte Abschnitt (154; 154C; 154D) in der Richtung der Fahrzeugbreite von dem ersten Erstreckungsabschnitt (152;
152C; 152D) krümmt, und sich der zweite Erstreckungsabschnitt (153; 153C;
153D) in Richtung der Fahrzeugbreite von dem gekrümmten Abschnitt (154;
154C; 154D) erstreckt, um mit dem Verbindungsabschnitt (102a) auf der Seite der Antriebseinheit (102) verbunden zu sein, **dadurch gekennzeichnet, dass** sich der zweite Erstreckungsabschnitt (153; 153C; 153D) in Richtung der Fahrzeugbreite von dem feststehenden Abschnitt (151A; 151C; 151D) erstreckt, sich der gekrümmte Abschnitt (154; 154C; 154D) in der Vorwärts- / und RückwärtsRichtung des Fahrzeuges von dem zweiten Erstreckungsabschnitt (153; 153C;
153D) erstreckt und sich der erste Erstreckungsabschnitt (152; 152C; 152D) in der Vorwärts- / und Rückwärts- Richtung des Fahrzeuges von dem gekrümmten Abschnitt (154; 154C; 154D) erstreckt, um mit dem Verbindungsabschnitt (102a) auf der Seite der Antriebseinheit (102) verbunden zu sein, wobei der gekrümmte Abschnitt (154; 154C; 154D). der sich zwischen dem ersten und
zweiten Erstreckungsabschnitt (152, 153) erstreckt, eine höhere Steifigkeit als der erste und zweite Erstreckungsabschnitt (152, 153) hat.

7. Fahrzeug vom Roller- Typ nach Anspruch 6, **dadurch gekennzeichnet, dass** der Verbindungsabschnitt (102a) auf der Seite der Antriebseinheit (102) der Kraftstoffzuführungsleitung (104A; 104C; 104D) einen relativen Betriebsbereich (A) hat, der sich gegen den Karosserierahmen (101) bewegt, wenn die Antriebseinheit (102) schwingt, und sich der erste Erstreckungsabschnitt (152; 152C; 152D) erstreckt in Richtung zu einer Position, abgehend in Richtung der Fahrzeugbreite in Bezug auf einen Mittelabschnitt des Betriebsbereiches (A).

8. Fahrzeug vom Roller- Typ nach einem der Ansprüche 1 bis 7, **dadurch gekennzeichnet, dass** die Kraftstoffzuführungsieitung (104A; 104C; 104D) ein gebildetes Rohr ist.

9. Fahrzeug vom Roller- Typ nach einem der Ansprüche 1 bis 8, **dadurch gekennzeichnet, dass** der gekrümmte Abschnitt (154; 154C; 154D) so gekrümmt ist, dass der erste Erstreckungsabschnitt (152; 152C; 152D) und der zweite Erstreckungsabschnitt (153; 153C; 153D) von einem rechten Winkel unter der Bedingung erstreckt, dass ein Fahrer auf einem Fahrzeug vom Roller- Typ fährt.

10. Fahrzeug vom Roller- Typ nach einem der Ansprüche 1 bis 9, **dadurch gekennzeichnet, dass** die Antriebseinheit (102) ein Kraftstoffeinspritzventil (145) hat und die Kraftstoffzuführungsleitung (104A; 104C; 104D) zwischen dem Kraftstofftank (103A; 103C; 103D) und dem Kraftstoffeinspritzventil (145) verbindet.

## Revendications

1. Véhicule du type scooter (100A ; 100B ; 100C ;
100D) comprenant :
un cadre (101),
un groupe moteur (102) accouplé de manière oscillante au cadre (101),
un réservoir de carburant (103A ; 103C ; 103D) monté sur le cadre (101), et
un tuyau d'amenée de carburant (104A ; 104C ; 104D) qui relie le réservoir de carburant (103A ; 103C ; 103D) et une partie de liaison (102a) prévue du côté groupe moteur (102),
étant précisé que le tuyau d'amenée de carburant (104A ; 104C 104D) se compose d'une partie fixe (151A ; 151C ; 151D) fixée au cadre (101) et d'une partie flexible (152, 153, 154 ; 152C, 153C, 154C ; 154D, 153D, 154D) qui s'étend entre la partie fixe (151A ; 151C ; 151D) et la partie de liaison (102a) prévue du côté groupe moteur (102), et
que la partie flexible (152, 153, 154 ; 152C, 153C, 154C ; 152D, 153D, 154D) se compose
d'une première partie d'extension (152 ; 152C ; 152D) qui s'étend dans le sens avant-arrière du véhicule,
d'une partie courbe (154 ; 154C ; 154D) qui est courbe de manière continue à partir de la première partie (152 ; 152C ; 152D), et
d'une seconde partie d'extension (153 ; 153C ; 153D) qui s'étend dans le sens de la largeur du véhicule, de manière continue, à partir de la partie courbe (154 ; 154C ; 154D), entre la partie fixe (151A ; 151C ; 151D) et la partie de liaison (102a) prévue du côté groupe moteur (102) ;
la première partie d'extension (152 ; 152C ; 152D) s'étend dans le sens avant-arrière du véhicule, à partir de la partie fixe (151A ; 151C ; 151D), la partie courbe (154 ; 154C ; 154D) décrit une courbe dans le sens de la largeur du véhicule, à partir de la première partie d'extension (152 ; 152C ; 152D), et la seconde partie d'extension (153 ; 153C ; 153D) s'étend dans le sens de la largeur du véhicule à partir de la partie courbe (154 ; 154C ; 154D) pour être reliée à la partie de liaison (102a) prévue côté groupe moteur (102),
**caractérisé en ce que** la partie courbe (154 ; 154C ; 154D) qui s'étend entre les première et seconde parties d'extension (152, 153) a une rigidité plus élevée que lesdites première et seconde parties d'extension (152, 153).

2. véhicule du type scooter selon la revendication 1, **caractérisé en ce que** le groupe moteur (102) est constitué d'une seule pièce par un moteur (141) et un dispositif de transmission de puissance (142).

3. Véhicule du type scooter selon la revendication 1 ou 2, **caractérisé en ce que** la partie fixe (151A ; 151C ; 151D) est fixée au cadre (101) à un endroit dévié vers l'avant ou vers l'arrière, dans le sens longitudinal du véhicule, par rapport à la partie de liaison (102a) prévue du côté groupe moteur (102).

4. Véhicule du type scooter selon la revendication 1 ou 3, **caractérisé en ce que** la partie fixe (151A ; 151C ; 151D) est fixée à un endroit dévié vers un côté, dans le sens de la largeur du véhicule, et la première partie d'extension (152 ; 152C ; 152D) est disposée à un endroit dévié vers ce côté, dans le sens de la largeur du véhicule.

5. véhicule du type scooter selon l'une des revendications 1 à 4, **caractérisé en ce que** la partie de liaison (102a) prévue du côté groupe moteur (102) du tuyau d'amenée de carburant (104A ; 104C ; 104D) a une plage de fonctionnement relative qui se déplace par rapport au cadre (101) quand le groupe moteur (102) oscille, et la première partie d'extension (152 ; 152C ; 152D) s'étend vers un endroit dévié, dans le sens de la largeur du véhicule, par rapport à une partie centrale de la plage de fonctionnement (A).

6. Véhicule du type scooter (100A ; 100B ; 100C ;
100D) comprenant :
un cadre (101),
un groupe moteur (102) accouplé de manière oscillante au cadre (101),
un réservoir de carburant (103A ; 103C ; 103D) monté sur le cadre (101), et
un tuyau d'amenée de carburant (104A ; 104C ; 104D) qui relie le réservoir de carburant (103A ; 103C ; 103D) et une partie de liaison (102a) prévue du côté groupe moteur (102),
étant précisé que le tuyau d'amenée de carburant (104A ; 104C ; 104D) se compose d'une partie fixe (151A ; 151C ; 151D) fixée au cadre (101) et d'une partie flexible (152, 153, 154 ; 152C, 153C, 154C ; 154D, 153D, 154D) qui s'étend entre la partie fixe (151A ; 151C ; 151D) et la partie de liaison (102a) prévue du côté groupe moteur (102), et
que la partie flexible (152, 153, 154 ; 152C, 153C, 154C ; 152D, 153D, 154D) se compose
d'une première partie d'extension (152 ; 152C ; 152D) qui s'étend dans le sens avant-arrière du véhicule,
d'une partie courbe (154 ; 154C ; 154D) qui est courbe de manière continue à partir de la première partie (152 ; 152C ; 152D), et
d'une seconde partie d'extension (153 ; 153C ; 153D) qui s'étend dans le sens de la largeur du véhicule, de manière continue, à partir de la partie courbe (154 ; 154C ; 154D), entre la partie fixe (151A ; 151C ; 151D) et la partie de liaison (102a) prévue du côté groupe moteur (102) ;
**caractérisé en ce que** la seconde partie d'extension (153 ; 153C ; 153D) s'étend dans le sens de la largeur du véhicule à partir de la partie fixe (151A ; 151C ; 151D), la partie courbe (154 ; 154C ; 154D) décrit une courbe dans le sens avant-arrière du véhicule, à partir de la seconde partie d'extension (153 ; 153C ; 153D), et la première partie d'extension (152 ; 152C ; 152D) s'étend dans le sens avant-arrière du véhicule à partir de la partie courbe (154 ; 154C ; 154D) pour être reliée à la partie de liaison (102a) prévue côté groupe moteur (102), étant précisé que
la partie courbe (154 ; 154C ; 154D) qui s'étend entre les première et seconde parties d'extension (152, 153) a une rigidité plus élevée que lesdites première et seconde parties d'extension (152, 153).

7. véhicule du type scooter selon la revendication 6, **caractérisé en ce que** la partie de liaison (102a) prévue du côté groupe moteur (102) du tuyau d'amenée de carburant (104A ; 104C ; 104D) a une plage de fonctionnement relative (A) qui se déplace par rapport au cadre (101) quand le groupe moteur (102) oscille, et la seconde partie d'extension (153 ; 153C ; 153D) s'étend vers un endroit dévié, dans le sens avant-arrière du véhicule, par rapport à la partie centrale de la plage de fonctionnement (A).

8. Véhicule du type scooter selon l'une des revendications 1 à 7, **caractérisé en ce que** le tuyau d'amenée de carburant (104A ; 104C ; 104D) est un tuyau profilé.

9. véhicule du type scooter selon l'une des revendications 1 à 8, **caractérisé en ce que** la partie courbe (154 ; 154C ; 154D) est courbe de telle sorte que la première partie d'extension (152 ; 152C ; 152D) et la seconde partie d'extension (153 ; 153C ; 153D) forment un angle droit quand une personne est installée sur le véhicule du type scooter.

10. véhicule du type scooter selon l'une des revendications 1 à 9, **caractérisé en ce que** le groupe moteur (102) a une soupape d'injection de carburant (145), et le tuyau d'amenée de carburant (104A ; 104C ; 104D) relie le réservoir de carburant (103A ; 103C ; 103D) et la soupape d'injection de carburant (145).
